# EUROPÄISCHE PATENTANMELDUNG

(11) **EP 1 503 262 A2**
(43) Veröffentlichungstag der Anmeldung: **02.02.2005**
(21) Anmeldenummer: 04017061.5
(22) Anmeldetag: 20.07.2004
(51) Int. Cl.: G05B 19/418

(54) **Verfahren zur dynamischen Vergabe von Adressen sowie zugehörige Verwendung für Heizeinrichtungen**

(30) Priorität: 31.07.2003 DE 10336301
(71) Anmelder: E.G.O. ELEKTRO-GERÄTEBAU GmbH, D-75038 Oberderdingen (DE)
(72) Erfinder: Baier, Martin, 76275 Ettlingen (DE)
(74) Vertreter: Patentanwälte Ruff, Wilhelm, Beier, Dauster & Partner

(57) **Zusammenfassung**

Die Erfindung bezieht sich auf ein Verfahren zur dynamischen Vergabe von Adressen an Slave-Einheiten (SE) eines Master-Slave-Bussystems sowie auf eine zugehörige Verwendung des Verfahrens für Heizeinrichtungen. Erfindungsgemäß wird der Anfang einer Busleitung (BL) mit einer Master-Einheit (ME) verbunden und durch die Slave-Einheiten (SE) fortlaufend durchgeschleift, die Slave-Einheiten (SE) unterbrechen in Abhängigkeit von einem Adressenvergabesignal die Busleitung (BL) intern und nehmen einen Schieberegister-Betriebszustand ein, währenddessen eingehende Adressen an die jeweils nachfolgende Einheit durchgeschoben werden, die Master-Einheit (ME) überträgt sequentiell an die mit ihr verbundene Slave-Einheit (SE) die zu vergebenden Adressen und in Abhängigkeit von einem Adressenübernahmesignal übernehmen die Slave-Einheiten (SE) jeweils ihre zu vergebenden Adressen als aktuelle Adressen, schließen die Busleitung (BL) intern kurz und nehmen einen Bus-Betriebszustand ein.

## Beschreibung

Die Erfindung betrifft ein Verfahren zur dynamischen Vergabe von Adressen nach dem Oberbegriff des Anspruchs 1 sowie eine zugehörige Verwendung des Verfahrens für flächige Heizeinrichtungen mit verteilten Heizmitteln.

Master-Slave-Bussysteme bestehen üblicherweise aus einer Master-Einheit und einer oder mehreren Slave-Einheiten. Die Master-Einheit steuert hierbei im wesentlichen den Betrieb des Bussystems. Sie kann beispielsweise die Arbitrierung, d.h. den Zugriff auf eine oder mehrere Busleitungen steuern, bei synchronen Bussen den Takt vorgeben und/oder Adressen an die Slave-Einheiten vergeben. Die Adressenvergabe, die statisch, beispielsweise bei der Herstellung einer Slave-Einheit, oder dynamisch erfolgen kann, dient zur eindeutigen Adressierung der Slave-Einheiten. Die statische Adressenvergabe hat den Nachteil, dass beim Ausfall einer Slave-Einheit diese durch eine Slave-Einheit mit identischer Adresse ersetzt werden muss. Dies verursacht Aufwand bei der Herstellung von Slave-Einheiten und bei der Wartung derartiger Bussysteme. Die dynamische Adressenvergabe ist komplexer zu realisieren und führt in der Regel zu einer Erhöhung der Initialisierungszeiten des Bussystems, da die Adressenvergabe in Abhängigkeit von einem Adressenvergabeprotokoll eine gewisse Zeit benötigt.

### Aufgabe und Lösung

Der Erfindung liegt als technisches Problem die Bereitstellung eines Verfahrens zur dynamischen Vergabe von Adressen an Slave-Einheiten eines Master-Slave-Bussystems sowie einer zugehörigen Verwendung für Heizeinrichtungen zugrunde, die mit geringem Aufwand zu realisieren sind, eine hohe Betriebssicherheit gewährleisten sowie eine Adressenvergabe in relativ kurzer Zeit ermöglichen.

Die Erfindung löst dieses Problem durch die Bereitstellung eines Verfahrens mit den Merkmalen des Anspruchs 1 und einer Verwendung mit den Merkmalen des Anspruchs 9. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Erfindungsgemäß wird der Anfang einer Busleitung mit einer Master-Einheit verbunden und durch die Slave-Einheiten fortlaufend durchgeschleift. Die Slave-Einheiten ändern in Abhängigkeit von einem Adressenvergabesignal den Betriebszustand, unterbrechen dabei die Busleitung intern, und nehmen einen Schieberegister-Betriebszustand bzw. eine Schieberegisterstruktur ein, währenddessen eingehende Adressen an die jeweils nachfolgende Einheit durchgeschoben werden. Die Master-Einheit überträgt sequentiell an die mit ihr verbundenen Slave-Einheiten die zu vergebenden Adressen. In Abhängigkeit von einem Adressenübernahmesignal übernehmen die Slave-Einheiten die jeweils zuletzt empfangene Adresse als aktuelle Adresse, schließen die Busleitung intern kurz und nehmen einen Bus-Betriebszustand bzw. eine Busstruktur ein. Mit Hilfe dieser Art der dynamischen Adressenvergabe ist es mit geringem Aufwand und mit hoher Betriebssicherheit möglich, die Adressenvergabe in relativ kurzer Zeit durchzuführen.

Während des Schieberegister-Betriebszustands entspricht das Bussystem aufgrund der internen Unterbrechung der Busleitung in den jeweiligen Slave-Einheiten im wesentlichen einem Schieberegister, in das die Master-Einheit die zu vergebenden Adressen einfach "hineinschiebt", ohne dass hierfür ein zusätzliches logisches und/oder in Hardware realisiertes Protokoll notwendig wäre. Ein "Durchschieben" der Adressen erfolgt dann in bzw. durch die Slave-Einheiten an die jeweils nächste Slave-Einheit. Wenn alle zu vergebenden Adressen "hineingeschoben" sind, übernehmen die Slave-Einheiten die jeweiligen Adressen in Abhängigkeit von einem Adressenübernahmesignal und wechseln in den normalen Bus-Betriebszustand, der sich dadurch auszeichnet, dass alle Slave-Einheiten und die Master-Einheit über eine oder mehrere Busleitungen miteinander verbunden sind, insbesondere direkt. In diesem Fall sind alle Slave-Einheiten über eine eindeutige Adresse adressierbar.

In einer Weiterbildung des Verfahrens führt die Master-Einheit die Adressenvergabeprozedur durch Setzen des Adressenvergabesignals nach einem Reset und/oder zyklisch mit einer einstellbaren Zykluszeit durch. Nach dem Reset bzw. Rücksetzen der Master-Einheit, beispielsweise nach dem Anschalten der Versorgungsspannung oder einem Austausch, kann eine Neuvergabe der Adressen sinnvoll sein. Zur Erhöhung der Betriebssicherheit, beispielsweise bei einer Funktionsstörung einer oder mehrerer Slave-Einheiten, kann eine Neuvergabe der Adressen auch in festen zeitlichen Abständen oder wenn eine Slave-Einheit nicht mehr ansprechbar ist angebracht sein.

In einer Weiterbildung des Verfahrens werden die Daten über das Bussystem synchron übertragen. Dies ermöglicht ein einfaches Durchschieben der zu vergebenden Adressen im Schieberegister-Betriebszustand. Mit einer asynchronen Betriebsweise kann auch gearbeitet werden. Ebenso sind gemischte Betriebsweisen möglich, jeweils abhängig vom Betriebszustand eine passende und vorteilhafte.

In einer Weiterbildung des Verfahrens werden Daten über das Bussystem seriell übertragen. Dies führt zu einer vereinfachten Verdrahtung des Bussystems im Vergleich zu einem Bus-System, bei dem die Daten parallel mit Hilfe mehrerer Busleitungen übertragen werden.

In einer Weiterbildung des Verfahrens setzt die Master-Einheit das Adressenvergabesignal und/oder das Adressenübernahmesignal dadurch, dass sie eine Taktleitung für eine vorbestimmte Dauer mit einem zugehörigen Pegel beaufschlagt, wobei die Dauer länger oder kürzer als eine typische Taktdauer ist. Auf diese Weise wird der Verdrahtungsaufwand reduziert, da keine spezielle Leitung zur Übertragung der entsprechenden Signale notwendig ist.

In einer Weiterbildung des Verfahrens wird das Ende der Busleitung mit der Master-Einheit verbunden und die Master-Einheit setzt das Adressenübernahmesignal, wenn sie die von ihr zuerst übertragene Adresse empfängt, die in diesem Fall eine Testadresse darstellt. Auf diese Weise erkennt die Master-Einheit, wann sämtliche Slave-Einheiten eine Adresse empfangen haben und kann dann das Adressenübernahmesignal setzen.

In einer Weiterbildung des Verfahrens wird das Ende der Busleitung mit der Master-Einheit verbunden und die Master-Einheit ermittelt die Anzahl der übertragenen Adressen bzw. die Anzahl der Slave-Einheiten bis zum Empfangen der von ihr zuerst übertragenen Adresse und verwendet die ermittelte Anzahl zur Überprüfung der Funktionsfähigkeit der Slave-Einheiten. Wenn alle Slave-Einheiten ordnungsgemäß funktionieren empfängt die Master-Einheit ihre zuerst übertragene Adresse nach einer definierten, von der Anzahl der Slave-Einheiten abhängigen Anzahl von Schiebetakten. Weicht die ermittelte Anzahl von der erwarteten Anzahl ab, kann auf eine Fehlfunktion einer oder mehrerer Slave-Einheiten geschlossen werden.

In einer Weiterbildung des Verfahrens spricht die Master-Einheit nach der Adressenvergabe jede Slave-Einheit einzeln mit einem Abfragecode an und überprüft, ob die entsprechende Slave-Einheit mit einem zugehörigen Antwortcode antwortet. Auf diese Weise kann ermittelt werden, ob und welche Slave-Einheiten nicht adressierbar sind. Als mögliche Ursachen hierfür kommen beispielsweise ein Defekt einer Slave-Einheit oder eine doppelte Adressenvergabe in Betracht.

Das Verfahren, wie es mit einem oder mehreren der vorstehend beschriebenen Merkmale versehen sein kann, wird für Heizeinrichtungen für eine flächige Beheizung, insbesondere für Kochfelder, verwendet. Eine derartige Heizeinrichtung ist in der deutschen Patentanmeldung 10258726.4 der Anmelderin beschrieben. Hierbei sind unabhängig voneinander ansteuerbare Heizmittel auf einer Heizfläche, beispielsweise in Matrixform, verteilt angeordnet. Jedem Heizmittel ist eine Slave-Einheit des Master-Slave-Bussystems zugeordnet. Vorteilhaft werden hierbei die Heizmittel bei einer Flächenüberdeckung durch ein zu beheizendes Kochgeschirr aktiviert, um diese Flächenüberdeckung möglichst gut abzubilden. Wenn jedem Heizmittel eine Slave-Einheit des Master-Slave-Bussystems zugeordnet ist, können diese nach einer erfolgten Adressenvergabe durch die Master-Einheit geeignet angesteuert werden. Die Adressenvergabe sollte hierbei zuverlässig und schnell erfolgen, da einem Benutzer keine erkennbaren Wartezeiten bei der Bedienung der Heizeinrichtung bzw. des Kochfeldes zugemutet werden können. Das beschriebene Verfahren kann beispielsweise auch für die Adressvergabe vernetzter, sogenannter intelligenter Schalter oder vernetzter Funktionsmodule bzw. elektronischer Funktionseinheiten bei Herden, Backöfen oder Waschmaschinen verwendet werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Eine vorteilhafte Ausführungsform der Erfindung ist in den Zeichnungen schematisch dargestellt und wird nachfolgend beschrieben. Hierbei zeigen:
- Fig. 1: eine Darstellung eines Master-Slave-Bussystems in einem Schieberegister-Betriebszustand,
- Fig. 2: eine Darstellung des Master-Slave-Bussystems in einem Bus-Betriebszustand und
- Fig. 3: eine Darstellung eines Kochfeldes mit darauf matrixförmig angeordneten, unabhängig voneinander ansteuerbaren Heizmitteln, denen jeweils eine Slave-Einheit des Master-Slave-Bussystems von Fig. 1 oder Fig. 2 zur Ansteuerung zugeordnet ist.

### Detaillierte Beschreibung des Ausführungsbeispiels

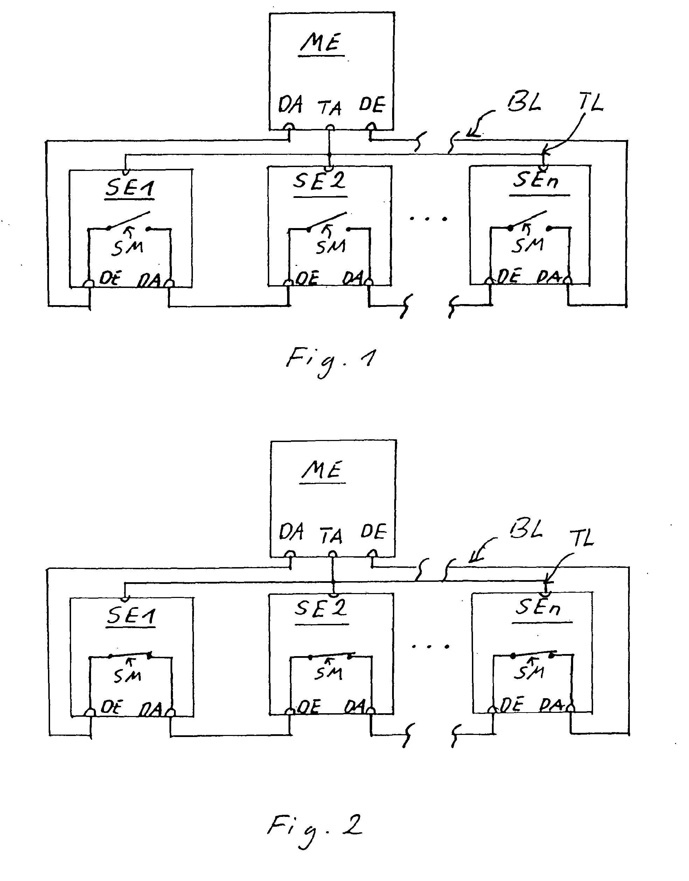

Fig. 1 zeigt ein serielles, synchrones Master-Slave-Bussystem in einem Schieberegister-Betriebszustand mit einer Master-Einheit ME und mehreren Slave-Einheiten SE1 bis SEn, die zur Ablaufsteuerung jeweils einen Mikroprozessor bzw. Mikrocontroller umfassen. Eine Busleitung BL beginnt an einem Datenausgang DA der Master-Einheit ME und ist mit einem Dateneingang DE der ersten Slave-Einheit SE1 verbunden. Eine Taktleitung TL dient zur Übertragung eines in der Mastereinheit ME erzeugten und an ihrem Taktausgang TA anstehenden Taktsignals an die Slave-Einheiten SE. Nachfolgend sind jeweils der Datenausgang DA der Slave-Einheit SE mit dem Dateneingang DE der jeweils nachfolgenden Slave-Einheit SE, oder bei einer letzten Slave-Einheit SEn mit dem Dateneingang DE der Master-Einheit ME, verbunden. Die Busleitung BL wird folglich beginnend beim Datenausgang DA der Master-Einheit ME durch die Slave-Einheiten SE1 bis SEn fortlaufend durchgeschleift und endet wiederum bei der Master-Einheit ME an deren Dateneingang DE.

Die Slave-Einheiten SE1 bis SEn weisen jeweils ein Schaltmittel SM auf, das in Abhängigkeit von einem Adressenvergabesignal geöffnet wird und dadurch die Busleitung intern unterbricht. Das Adressenvergabesignal wird durch die Master-Einheit ME dadurch gesetzt, dass sie die Taktleitung TL des synchronen Bussystems für eine vorbestimmte Dauer mit einem Low-Pegel beaufschlagt, die länger als eine typische Taktdauer, z.B. 250 ms, ist. Das Setzen des Adressenvergabesignals erfolgt nach einem Reset, d.h. bei der Initialisierung des Bussystems, sowie zyklisch mit einstellbarer Zykluszeit. Die Zeitdauer zwischen den Adressvergaben kann eine Sekunde bis mehrere Minuten betragen. Durch das zyklische Setzen kann ein Adressenverlust in einer Slave-Einheit SE1 bis SEn, beispielsweise aufgrund eines elektrischen Störimpulses, behoben werden. Die Taktleitung TL kann zusätzlich noch zur Synchronisation der Slave-Einheiten verwendet werden.

Wenn die Schaltmittel SM wie in Fig. 1 geöffnet sind, befindet sich das Bussystem in einem Schieberegister-Betriebszustand. Die Master-Einheit überträgt bzw. sendet hierbei sequentiell eine Anzahl zu vergebender Adressen an den Dateneingang DE der mit ihr verbundenen, ersten Slave-Einheit SE1, die der Anzahl der Slave-Einheiten SE1 bis SEn des Bussystems entspricht. Nachdem die erste Slave-Einheit SE1 die zweite Adresse empfängt, schiebt sie die erste Adresse an die nachfolgende Slave-Einheit SE2 weiter. Dieser Vorgang wiederholt sich für alle Slave-Einheiten SE1 bis SEn. Die Art und Weise wie bzw. wann die Adressen weitergeschoben werden, ist hierbei beliebig variierbar. So kann beispielsweise ein Durchschieben zur jeweils nächsten Slave-Einheit SE bereits vor dem vollständigen Empfangen einer Adresse beginnen. Weiterhin ist es möglich, die Adressen in einer Slave-Einheit zuerst vollständig zwischenzuspeichern.

Wenn die Master-Einheit ME an ihrem Dateneingang DE die von ihr zuerst übertragene Adresse, die eine Testadresse ist, empfängt, kann sie daraus schließen, dass die Adressen durch sämtliche Slave-Einheiten SE1 bis SEn durchgeschoben wurden und somit in sämtlichen Slave-Einheiten eine Adresse steht. Durch Überprüfung der Anzahl der übertragenen Adressen bis zum Empfangen der zuerst übertragenen Adresse kann die Master-Einheit die Funktionsfähigkeit der Slave-Einheiten testen.

Die Master-Einheit ME setzt nun ein Adressenvergabesignal durch Beaufschlagen der Taktleitung TL des synchronen Bussystems für eine vorbestimmte Dauer mit einem High-Pegel, die länger oder kürzer als eine typische Taktdauer, beispielsweise 1ms, ist. Die Slave-Einheiten SE1 bis SEn übernehmen bzw. speichern daraufhin jeweils ihre zu vergebenden Adressen als aktuelle Adressen in einen nicht gezeigten internen Speicher, der beispielsweise als RAM ausgeführt sein kann. Anschließend wechseln die Slave-Einheiten SE1 bis SEn durch Schließen ihres jeweiligen Schaltmittels SM in einen in Fig. 2 gezeigten Bus-Betriebszustand. Während des Bus-Betriebszustands sind alle Slave-Einheiten SE1 bis SEn durch die Busleitung BL direkt miteinander verbunden. Die Master-Einheit spricht anschließend jede Slave-Einheit SE1 bis SEn einzeln mit einem Abfragecode an und überprüft, ob die entsprechende Slave-Einheit SE1 bis SEn mit einem zugehörigen Antwortcode antwortet. Weitere Überprüfungs- bzw. Sicherungsmechanismen sind beispielsweise in den Slave-Einheiten SE1 bis SEn realisierbar. So kann eine Slave-Einheit SE1 bis SEn unter gewissen Betriebsbedingungen, beispielsweise in einem Störfall, selbstständig, d.h. ohne Anliegen eines Adressenübernahmesignal, in den Bus-Betriebszustand wechseln. Dadurch bleibt die Funktion des Gesamtsystems weiterhin erhalten.

Im Bus-Betriebszustand kann die Datenübertragung auch asynchron erfolgen. Die Datenleitung kann grundsätzlich bidirektional im Halbduplex-Betrieb genutzt werden. Im Bus-Betriebszustand bei asynchroner Datenübertragung kann die Taktleitung TL auch als eine weitere Datenleitung verwendet werden. Dies ermöglicht die Datenübertragung im Vollduplex-Betrieb.

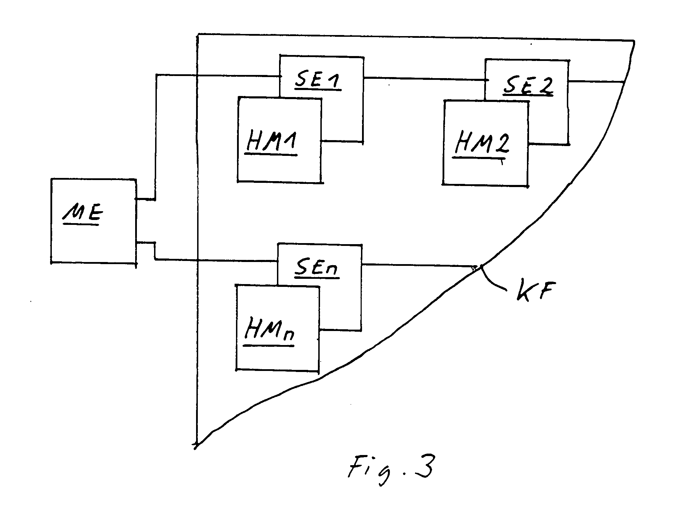

Fig. 3 zeigt eine Darstellung eines Ausschnitts aus einem Kochfeld KF mit darauf matrixförmig angeordneten, unabhängig voneinander ansteuerbaren Heizmitteln HM1 bis HMn, denen jeweils eine Slave-Einheit SE1 bis SEn des Master-Slave-Bussystems von Fig. 1 oder Fig. 2 zur Ansteuerung zugeordnet ist. Zur Adressenvergabe wird das oben beschriebene Verfahren verwendet, wodurch sich eine minimale Initialisierungszeit bei gleichzeitiger hoher Betriebssicherheit ergibt.

## Patentansprüche

1. Verfahren zur dynamischen Vergabe von Adressen an Slave-Einheiten (SE1 bis SEn) eines Master-Slave-Bussystems, **dadurch gekennzeichnet, dass**
- der Anfang einer Busleitung (BL) mit einer Master-Einheit (ME) verbunden und durch die Slave-Einheiten (SE1 bis SEn) fortlaufend durchgeschleift wird,
- die Slave-Einheiten (SE1 bis SEn) in Abhängigkeit von einem Adressenvergabesignal die Busleitung (BL) intern unterbrechen und
- einen Schieberegister-Betriebszustand einnehmen, währenddessen eingehende, zu vergebende Adressen an die jeweils nachfolgende Einheit durchgeschoben werden,
- die Master-Einheit (ME) an die mit ihr verbundene Slave-Einheit (SE1) die zu vergebenden Adressen sequentiell überträgt und
- in Abhängigkeit von einem Adressenübernahmesignal die Slave-Einheiten (SE1 bis SEn) jeweils ihre zu vergebenden Adressen als aktuelle Adressen übernehmen,
- die Busleitung (BL) intern kurzschließen und
- einen Bus-Betriebszustand einnehmen.

2. Verfahren nach Anspruch 1, **dadurch gekennzeichnet, dass** die Master-Einheit (ME) das Adressenvergabesignal nach einem Reset und/oder zyklisch mit einer einstellbaren Zykluszeit setzt.

3. Verfahren nach Anspruch 1 oder 2, **dadurch gekennzeichnet, dass** Daten über das Bussystem synchron übertragen werden.

4. Verfahren nach einem der Ansprüche 1 bis 3, **dadurch gekennzeichnet, dass** Daten über das Bussystem seriell übertragen werden.

5. Verfahren nach Anspruch 3 oder 4, **dadurch gekennzeichnet, dass** die Master-Einheit (ME) das Adressenvergabesignal und/oder das Adressenübernahmesignal dadurch setzt, dass sie eine Taktleitung (TL) für eine vorbestimmte Dauer mit einem zugehörigen Pegel beaufschlagt, wobei die Dauer länger oder kürzer als eine typische Taktdauer ist.

6. Verfahren nach einem der vorhergehenden Ansprüche, **dadurch gekennzeichnet, dass** das Ende der Busleitung (BL) mit der Master-Einheit (ME) verbunden wird und die Master-Einheit (ME) das Adressenübernahmesignal setzt, wenn sie die von ihr zuerst übertragene Adresse empfängt.

7. Verfahren nach einem der vorhergehenden Ansprüche, **dadurch gekennzeichnet, dass** das Ende der Busleitung (BL) mit der Master-Einheit (ME) verbunden wird und die Master-Einheit (ME) die Anzahl der übertragenen Adressen bis zum Empfangen der von ihr zuerst übertragenen Adresse ermittelt und die ermittelte Anzahl zur Überprüfung der Funktionsfähigkeit der Slave-Einheiten (SE1 bis SEn) verwendet.

8. Verfahren nach einem der vorhergehenden Ansprüche, **dadurch gekennzeichnet, dass** nach der Adressenvergabe die Master-Einheit (ME) jede Slave-Einheit (SE1 bis SEn) einzeln mit einem Abfragecode anspricht und überprüft, ob die entsprechende Slave-Einheit (SE1 bis SEn) mit einem zugehörigen Antwortcode antwortet.

9. Verwendung des Verfahrens nach einem der Ansprüche 1 bis 8 für Heizeinrichtungen für eine flächige Beheizung, insbesondere für Kochfelder (KF), bei denen unabhängig voneinander ansteuerbare Heizmittel (HM1 bis HMn) auf einer Heizfläche verteilt angeordnet sind, und jedem Heizmittel (HM1 bis HMn) eine Slave-Einheit (SE1 bis SEn) des Master-Slave-Bussystems zugeordnet ist.
